# EUROPÄISCHE PATENTANMELDUNG

(11) **EP 1 308 867 A2**
(43) Veröffentlichungstag der Anmeldung: **07.05.2003**
(21) Anmeldenummer: 02024116.2
(22) Anmeldetag: 29.10.2002
(51) Int. Cl.: G06F 17/60

(54) **Beweglicher Datenträger für elektronische Datenverarbeitungsanlagen zur Darstellung von Werbung für mehrere Firmen**

(30) Priorität: 31.10.2001 DE 10153299
(71) Anmelder: Schemann, Ottilie, 42329 Wuppertal-Vohwinkel (DE)
(72) Erfinder: Schemann, Ottilie, 42329 Wuppertal-Vohwinkel (DE)
(74) Vertreter: Pfingsten, Dieter, Dipl.-Ing.

(57) **Zusammenfassung**

Ein beweglicher Datenträger für elektronische Datenverarbeitungsanlagen, insbesondere eine magnetisch oder durch Laser lesbare Speicherplatte, Compakt-Disk (CD) oder Digitale Videodisk (DVD) enthält ein Programm und Informationen zur Darstellung von Werbung mehrerer Firmen am Bildschirm eines PC. Zusätzlich zu den auf dem Datenträger gespeicherten Werbedaten werden auf dem Datenträger Daten zur Ausspielung von Gegenständen gespeichert und durch auf dem Datenträger gespeicherte Programmroutinen derart vernetzt und gegen einander verriegelt, daß die Ausspielungsdaten und Gegenstände der Ausspielung nur über die Werbedaten zumindest einer Firma zugänglich sind, oder daß über die Ausspielungsdaten die Werbedaten zumindest einer Firma selbsttätig aufrufbar sind oder zur Herbeiführung des Ausspielungserfolges aufgerufen werden müssen. Die Ausspielungsdaten sind nach einem auf dem Datenträger abgespeicherten Zeitprogramm aufrufbar. Der Datenträger enthält einen Dokumentenbereich, welcher zur Ausgabe eines Tellnehmerscheins aufrufbar ist, wenn der Ausspielbereich geöffnet oder vorzugsweise nach vorgegebenen Erfolgskriterien durchlaufen wird.

## Beschreibung

Die Erfindung betrifft einen beweglichen Dätenträger für elektronische Datenverarbeitungsanlagen nach dem Oberbegriff der Ansprüche.

Es ist allgemein bekannt, dass derartige Datenträger auch dazu benutzt werden, um Werbung von Firmen am Bildschirm eines PC (Heimrechner, Personalcomputer) darzustellen.

Dennoch hat der bewegliche Datenträger kaum Eingang gefunden als Werbemedium, da das Abspielen von Werbeinformationen nicht oder nur dann auf Interesse stößt, wenn die Werbeinformationen durch sachlichen Bezug oder zeitlichen Bezug in andere Informationen eingebunden werden, wie dies vom Fernsehen, insbesondere Werbefernsehen her bekannt ist.

Aufgabe der Erfindung ist, die Daten eines derartigen Datenträgers in ihrer gegenseitigen Abhängigkeit so zu organisieren, dass ein besonderes Interesse entsteht, die Werbedaten in einer gewünschten, beeinflußbaren Vollständigkeit und Regelmäßigkeit sowie in kurzen Zeitabständen aufzurufen und so intensiv zur Kenntnis zu nehmen, dass die wesentlichen Werbedaten wie insbesondere Adresse, Branche, Waren und Dienstleistungen sich einem breiten Publikum einprägen.

Die Lösung dieser Aufgabe ergibt sich aus den Ansprüchen 1 und/oder 2 und/oder 3. Den Lösungen liegt der allgemeine Gedanken zu Grunde, dass das Interesse an der Werbung in besonderer Weise geweckt werden muss und deß hierzu eine Ausspielung mit dem eigenen Interesse an der Erzielung eines Gewinns besonders geeignet ist. Aus diesem Grunde sind auf dem Datenträger gleichermaßen die Werbedaten einer Vielzahl von Firmen und die Ausspielungsdaten von Auslosungen, Gewinnspielen und ähnlichem enthalten. Durch diese Ausspielungen können die Teilnehmer einen Gewinn erzielen, insbesondere bestimmte Gegenstände gewinnen. Diese Gegenstände werden vorzugsweise von einer oder mehreren der werbenden Firmen beigesteuert. Die Werbedaten und die Ausspielungsdaten können nur durch Programme, Programmroutinen, Programmabschnitte u. dergl aufgerufen werden, welche ebenfalls auf dem Datenträger gespeichert oder zuvor auf den Rechner geladen werden müssen. Durch diese Programme werden die Ausspielungsdaten und die Werbedaten so vernetzt, daß bei Teilnahme an der Ausspielung auch die Werbedaten einer gewünschten Zahl von teilnehmenden Firmen aufgerufen werden müssen. Auch der Aufruf der zur Ausspielung anstehenden Gewinne, welche ebenfalls auf dem Datenträger gespeichert sein können, kann durch entsprechende Programmroutinen vom vorherigen Aufruf von Werbedaten abhängig gemacht werden.

In diesem Sinne kann die Erfindung insbesondere durch die folgenden konkreten Ausführungen realisiert werden:
Bei der Lösung nach Anspruch 1 ist der elektronische Datenträger so organisiert, dass Werbedaten einer oder vorzugsweise mehrerer Firmen zuvor aufgerufen und durchlaufen werden müssen, bevor ein Zugang zu den Daten der Ausspielung möglich ist.

Bei der Lösung nach Anspruch 2 sind die Ausspielungsdaten zwar selbstständig erreichbar, der Aufruf der Ausspielungsdaten bewirkt jedoch vorzugsweise automatisch auch den Aufruf von Werbedaten. Dieser Aufruf kann selbsttätig erfolgen, z. B. in bestimmten Folgen, insbesondere zeitlichen Folgen. Es können aber auch auf dem Bildschirm Verbindungstasten dargestellt werden, deren Anklicken zum Aufruf von Werbedaten führt. Diese Lösung ist insbesondere dann geeignet, wenn der Aufruf der Werbedaten zur Herbeiführung des Ausspielungserfolges notwendig oder nützlich ist.

Nützlich ist der Aufruf der Werbedaten insbesondere dann, wenn in den Werbedaten Informationen enthalten sind, deren Kenntnis zur Herbeiführung des Ausspielungserfolges erforderlich ist. Die Lösung nach Anspruch 3 zeichnet sich dadurch aus, dass der Ausspielungserfolg davon abhängt, dass die Werbung bestimmter Firmen oder die Werbung einer bestimmten Anzahl von Firmen aufgerufen wird.

Es sei erwähnt, dass ein Datenträger nicht nach einem einzigen dieser Prinzipen organisiert sein muss, sondern daß diese Prinzipien gleichzeitig oder in aufeinanderfolgenden Routinen angewandt werden können.

Es ist ersichtlich, dass das Interesse an der Ausspielung und damit auch die Wirksamkeit der Werbung sehr wesentlich davon abhängt, welche Gegenstände zur Ausspielung anstehen.

In der Weiterbildung nach Anspruch 4 kann der Nutzer diese Gegenstände erfragen. Es ist sodann Sache der werbenden Firmen, Gegenstände mit ausreichender Anziehungskraft auszuspielen.

Die Effektivität einer Werbung wird hervorgerufen und gesteigert durch ihre Wiederholung. Die Ausbildung des Datenträgers nach Anspruch 5 ruft bei den Nutzern ein zeitlich wiederkehrendes Interesse hervor, das sie zur einer zeitlich wiederkehrenden Nutzung des Datenträgers und zum zeitlich wiederkehrenden Abspielen der Werbung aufgrund der Organisation der Daten nach den Ansprüchen 1-3 veranlaßt.

In der Ausbildung nach Anspruch 6 wird ein selbständiges Wiederholungsinteresse dadurch geschaffen, dass nicht nur die zur Ausspielung anstehenden Gegenstände nur in einem durch das Zeitprogramm des Datenträgers gesteuerten Zeitfenster ersichtlich sind, sondern auch die Ausspielungbedingungen sich zeitlich ändern. Das bedeutet, dass innerhalb dieses Zeitfensters, d. h. eines bestimmten Zeitraums jeweils eine neue Ausspielung mit vorzugsweise auch anderen Gegenstände erfolgt. Innerhalb des Zeitfensters können nur diese Gegenstände gesehen werden. Nach Beendigung des Ausspielungszeitraumes muss der Datenträger erneut aufgelegt werden und es erfolgt der Aufruf der nun geltenden Ausspielungbedingungen und Gewinne.

Es wird sodann insbesondere in der Weiterbildung nach Anspruch 7 auch das Interesse an der Kenntnis der zur Ausspielung anstehenden Gegenstände genutzt, um eine Wiederholung der Werbung zu erreichen.

Dabei können vorzugsweise die Daten des Gewinnbereiches ebenso wie die Daten zur Ausspielung von Gegenständen nach den Lösungen der Ansprüche 1-3 organisiert sein. Das bedeutet, dass der Gewinnbereich nur über den Werbebereich erreichbar ist, oder daß durch Erreichung des Gewinnbereichs gleichzeitig auch Werbung aufgerufen wird oder daß die ausgespielten Gegenstände ebenfalls nach Art einer Ausspielung sichtbar gemacht werden, indem die ausgespielten Gegenstände nur bei bestimmten Firmen sichtbar gemacht werden undloder nur aufgrund von Informationen sichtbar gemacht werden, welche in der Werbung bestimmter Firmen enthalten ist.

Es wird durch die erfindungsgemäße Organisation des Datenträgers angestrebt, dass der Datenträger in gleicher Beschaffenheit für eine größere Anzahl von Firmen benutzt wird. Es kann sich dabei um Firmen einer Stadt, eines Einkaufsgebietes usw. handeln. Der Datenträger wird von diesen Firmen - mit oder ohne Gebühr - an ihre Kunden ausgegeben. Diese Ausgabe erfolgt vorzugsweise in den Geschäftslokalen, z.B. nach einem Einkauf.

Es wird nunmehr aber auch angestrebt, dass die Kunden in das Geschäftslokal zurückkehren. Dies wird einerseits dadurch erreicht, dass der Datenträger ein bestimmtes Zeitprogramm enthält und nach Ablauf der vorgesehenen Zeit oder Zahl der vorgesehen Ausspielungen ungültig wird bzw. nicht mehr aktuell ist.

Die Rückkehr der Kunden in das Geschäftslokal wird aber auch dadurch erreicht, dass nach Anspruch 8 vorgesehen ist, dass der erfolgreich an der Ausspielung teilnehmende Kunde einen Teilnehmerschein von seinem eigene PC ausgedruckt erhält, der Bedingung für die Teilnahme an der Auslosung ist, welche üblicher Weise eine solche Ausspielung beendet. Dieser Teilnehmerschein enthält Daten, die es den Veranstaltern der Ausspielung ermöglichen festzustellen, ob der Nutzer die Ausspielung erfolgreich durchlaufen hat. Es wird hierdurch auch eine Rückmeldung über die Effektivität der Werbung erreicht.

Dies gilt insbesondere für die Weiterbildung nach Anspruch 9.

Im folgenden wird die Erfindung anhand von Ausführungsbeispielen und der Zeichnung beschrieben.

Es zeigen:
Figur 1 Den gespeicherten Programmfluss mit Eingang über die Werbedaten.
Figur 2 Den gespeicherten Programmfluss mit Zugang über die Ausspielungsdaten.
Figur 3 Den Programmfluss mit Zugang über die Gewinndaten

Die Erfindung bezieht sich auf elektronisch Datenträger, welche einen beliebigen Zugriff auf die abgespeicherten Daten in technischer Hinsicht gestatten. Hierbei handelt es sich insbesondere um magnetische Datenträger in Form von Disketten und um optische Datenträger in Form von Compact Discs (CD) und Digitalen Videodisks (DVD). Die optischen Datenträger bestehen aus Plastikscheiben, in welche Vertiefungen eingebracht sind, die durch Laserstrahl abgetastet werden. Die Verteilung der Punkte und die dieser Verteilung entsprechende Reflektion des Laserstrahls repräsentiert die digitale Abfolge von Datensignalen und

Programmsignalen. Disketten und Compact Discs einschl. DVD eignen sich insbesondere zur Abspielung auf Heimrechnern (PC). Dabei haben die optischen Datenträger den Vorteil, dass sie einerseits die Speicherung sehr großer Datenmengen gestatten und andererseits sehr robust sind. Sie werden auch in Größen von z.B. einer Visitenkarte hergestellt und können werbemäßig beschriftet sein.

Die eingespeicherten Programme, Programmroutinen u.s.w. (in dieser Anmeldung als Programme bezeichnet) bestehen aus Programmbefehlen, die an den PC weitergegeben werden oder die vorübergehend oder dauernd in der Datenverarbeitungsanlage gespeichert werden. Diese Programmbefehle steuern den Abruf der Daten, die in Informationsbereichen des Datenträgers enthalten sind.

Die Informationsbereiche bestehen nach dieser Erfindung zum einen aus den Werbebereichen und zum anderen aus den Ausspielbereichen.

In den Werbebereichen sind Informationen gespeichert, z. B. in Form von bildlichen oder textlichen Darstellungen, die Werbung für unterschiedliche Firmen darstellen. Die Werbebereiche sind in den Zeichnungen mit dem Bezugszeichen 1 versehen. Die Werbebereiche sind in Informationsblöcke unterteilt, welche jeweils einer bestimmten Firma zugeordnet sind. Diese Informationsblöcke sind mit den Buchstaben a,b,c... gekennzeichnet.

In den Zeichnungen ist der Informationsbereich, welcher die Daten für die Ausspielungen enthält, mit dem Bezugszeichen 2 bezeichnet. Dieser sogenannte Ausspielbereich ist in sogenannte Folgeblöcke untergliedert, welche in den Zeichnungen mit den Buchstaben 2a, 2b, 2b..... versehen sind. Diese Folgeblöcke enthalten Informationen, die den aufeinanderfolgenden Ausspielungen zugeordnet sind und sich insbesondere hinsichtlich der auszuspielenden Gewinne und/oder hinsichtlich der Ausspielbedingungen unterscheiden können. Die einzelnen Folgeblöcke 2a, 2b, 2c usw. des Ausspielbereichs werden aufgerufen durch ein gespeichertes Zeitprogramm (Block 5). Dieses Zeitprogramm gewährleistet, dass die Ausspielbedingungen jeweils nur in einem bestimmten Zeitbereich sichtbar gemacht werden können, z. B. für die Zeitdauer eines bestimmten Monats. Im nächsten Monat wird der nächste Folgeblock von Ausspielungsdaten sichtbar gemacht und es beginnt eine neue Ausspielung mit einem neuen Gewinnspektrum und - falls gewünscht - auch neuen Ausspielbedingungen. Jeder Folgeblock 2a,2b,2c.... des Ausspielbereichs enthält einen Teilbereich, in welchem die Gewinne gespeichert sind. Dieser Teilbereich ist mit dem Bezugszeichen 2.2 versehen. Ein anderer Teilbereich, welcher mit dem Bezugszeichen 2.1 versehen ist, enthält insbesondere die Ausspielbedingungen sowie die zu lösenden Aufgaben.

Mit dem Bezugszeichen 3 ist ein Programmbereich bezeichnet, welcher die Speicherung der durchlaufenden Ausspielungsschritte und der erzielten Ergebnisse in dem Rechner, vorzugsweise im Arbeitsspeicher des Rechners bewirkt. Falls erwünscht, können dabei auch die durchlaufenden Teilbereiche des Werbeblocks registriert und gespeichert werden. Dieser Dokumentationsbereich 3 des Programmes enthält auch einen Befehl, mit dem die eingespeicherten Daten abgerufen und als Teilnehmerschein 4 ausgedruckt werden können. Dieser Befehl wird z. B. durch eine auf dem Bildschirm erscheinende Befehlstaste (button) aktiviert. Der Teilnehmerschein 4 dient für den Benutzer des Datenträgers als Ausweis dafür, dass er an der in dem betroffenen Zeitraum stattfindenden Ausspielung teilgenommen und dabei die ausgewiesenen Ausspielungsergebnisse erzielt hat. Dieser Teilnehmerschein ist sodann die Basis für die nachfolgende Auslosung der ausgelosten Gewinne.

Alternativ oder zusätzlich kann auch vorgesehen sein, dass die gespeicherten Daten durch den Dokumentationsbereich 3 des Programmes über den PC und das Internet an einen Server 6 weitergegeben werden. In diesem Server werden die Daten aller Teilnehmer gesammelt. Auf diese Weise kann auch die Ausspielung über das Internet erfolgen und auf einer in das Internet gestellten Bildseite sichtbar gemacht werden.

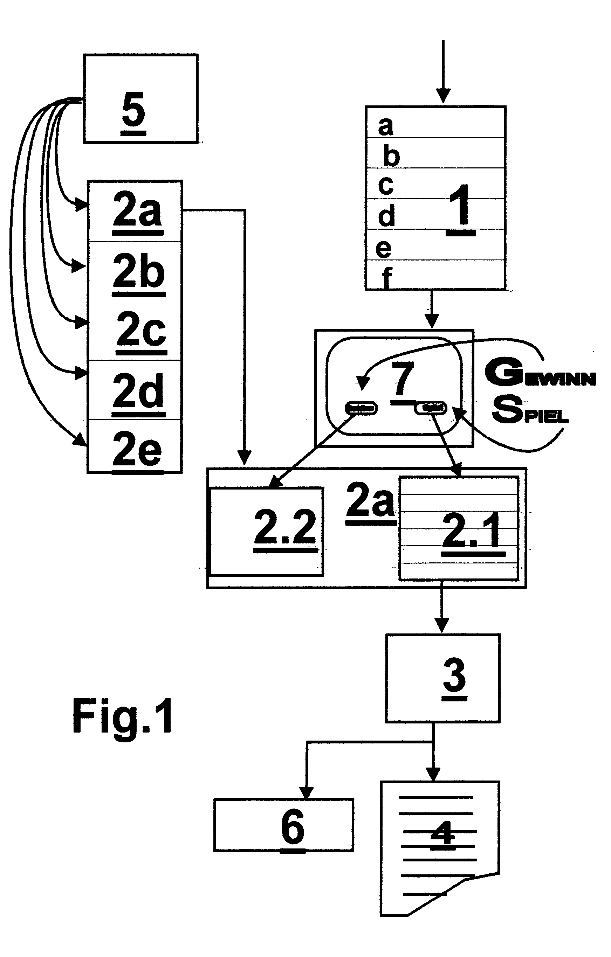

In dem Ausführungsbeispiel nach Figur 1 ist folgender Ablauf vorgesehen: Das in dem Datenträger gespeicherte Programm sieht lediglich einen unmittelbaren Zugang zu dem Werbereich 1 vor. Erst wenn ein Teil oder alle Teilbereiche 1a, 1b... aufgerufen worden und durchlaufen worden sind, erfolgt durch das Programm automatisch auch der Aufruf eines der Folgeblöcke 2a,2b,2c...des Ausspielbereichs 2. Es kann aber auch auf dem Bildschirm eine Befehlstaste (button) erscheinen, durch deren Betätigung der entsprechende Folgeblock des Ausspielbereichs aufgerufen wird.

Welcher der Folgeblöcke 2a, 2b, 2c... des Ausspielbereichs aufgerufen wird, hängt von der Zeitsteuerung 5 ab. Die Zeitsteuerung 5 kann z. B. vorsehen, dass jedem Monat bestimmte Ausspielbedingungen und/oder Spielgewinne nach einem der Folgeblöcke 2a, 2b, 2c... zugeordnet werden. Dargestellt ist, dass durch die Zeitsteuerung die Ausspielbedingungen und Spielgewinne des Folgeblocks 2a aufgerufen wurde.

Wie bereits ausgeführt, besteht jeder Folgeblock des Ausspielbereichs aus dem Gewinnbereich 2.2 und den Ausspielbedingungen 2.1. Diese beiden Teilbereiche können gemeinsam und automatisch aufgerufen werden. In Figur 1 ist jedoch als Alternative dargestellt, dass nach dem Durchlaufen des Werbebereichs 1 auf den Bildschirm 7 zwei Befehlstasten erscheinen, die einerseits den Bereich der Ausspielbedingungen und andererseits dem Gewinnbereich 2.2 zugeordnet sind. Durch Wahl einer der Tasten können die Ausspielbedingungen 2.1 oder der Gewinnbereich 2.2 aufgerufen werden.

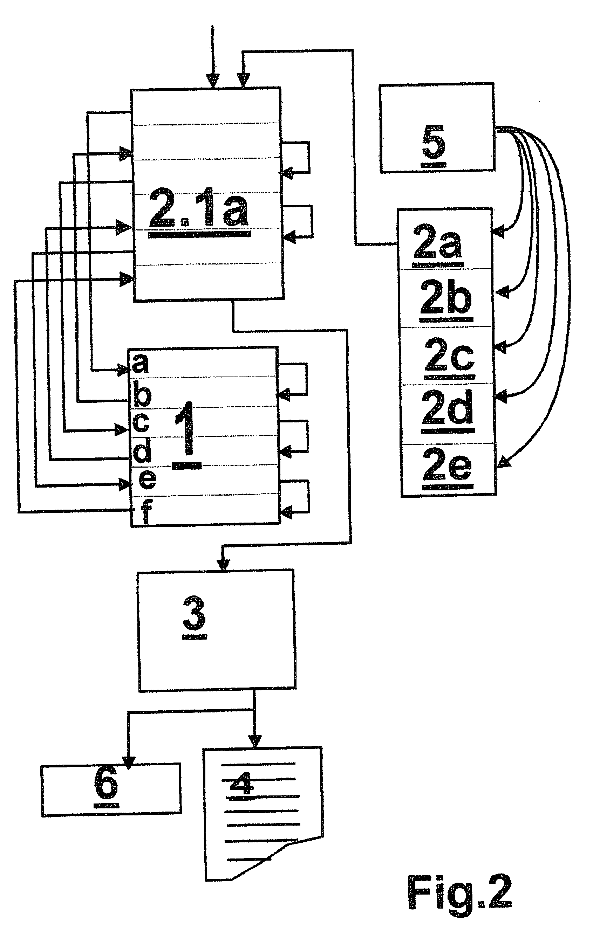

Bei der Programmgestaltung nach Figur 2 ist vorgesehen, dass bei Aufruf des Programmes auch ein unmittelbarer Zugang zu dem Ausspielbereich 2 möglich ist. Aufgerufen wird zunächst der Teilbereich 2. Die zeitliche Steuerung des jeweils aufzurufenden Folgeblocks 2a, 2b, 2c.. des Ausspielungsbereichs erfolgt wiederum durch die Zeitsteuerung 5. Es erscheinen z.B. die Ausspielbedingungen 2.2a. Nach Durchlaufen eines ersten Teilbereichs der Ausspielbedingungen 2.2a erfolgt eine Blockierung der weiteren Ausspielbedingungen. Entweder schaltet das Programm automatisch weiter in den Werbebereich 1, wo z. B. die Werbung der Firma a aufgerufen wird. Oder es erscheint eine Befehltaste, die eine Weiterschaltung in den Werbebereich gestattet. Die folgende Werbung der Firma a kann nur dadurch verlassen werden, dass in die Werbung der Firma b weitergeschaltet wird. Bei Verlassen der Werbung der Firma b wird die Blockierung der weiteren Ausspielbedingungen wieder aufgehoben. Es erfolgt selbsttätig oder über Befehlstaste ein Zurückschalten in die Ausspielbedingungen 2.2a, und zwar in einen weiteren Teilbereich; nach Durchlaufen dieses Teilbereiches erfolgt eine automatische Weiterschaltung in den nächsten Teilbereich und sodann wiederum eine automatische Weiterschaltung oder Weiterschaltung durch Befehlstaste in den Werbebereich zu der Firma c, jedenfalls aber eine Blockierung der weiteren Ausspielbedingungen. Erst über weitere Bereiche der Werbung kann wiederum die Ausspielung erreicht werden. Durch diese Verzahnung des Ausspielbereiches und des Werbebereiches wird erreicht, dass einerseits die gesamte Werbung durchlaufen wird, andererseits jedoch durch die Zwischenschaltung der Ausspielbereiche die notwendige Spannung und das notwendige Interesse erhalten wird. Erst nach Durchlaufen des gesamten Ausspielbereiches und Werbebereiches erfolgt die Weiterschaltung auf den Dokumentationsbereich 3 und die Abspeicherung der Ausspielungsdaten wie zuvor beschrieben worden ist. Dabei ist in Fig.2 jedoch insbesondere auch dargestellt, daß der letzte Teilbereich der Ausspielbedingungen, dessen Anwahl zur unverzichtbaren Bedingung der Teilnahme an der Ausspielung gemacht worden ist, blockiert bleibt, bis die Werbung vollständig durchlaufen worden ist.

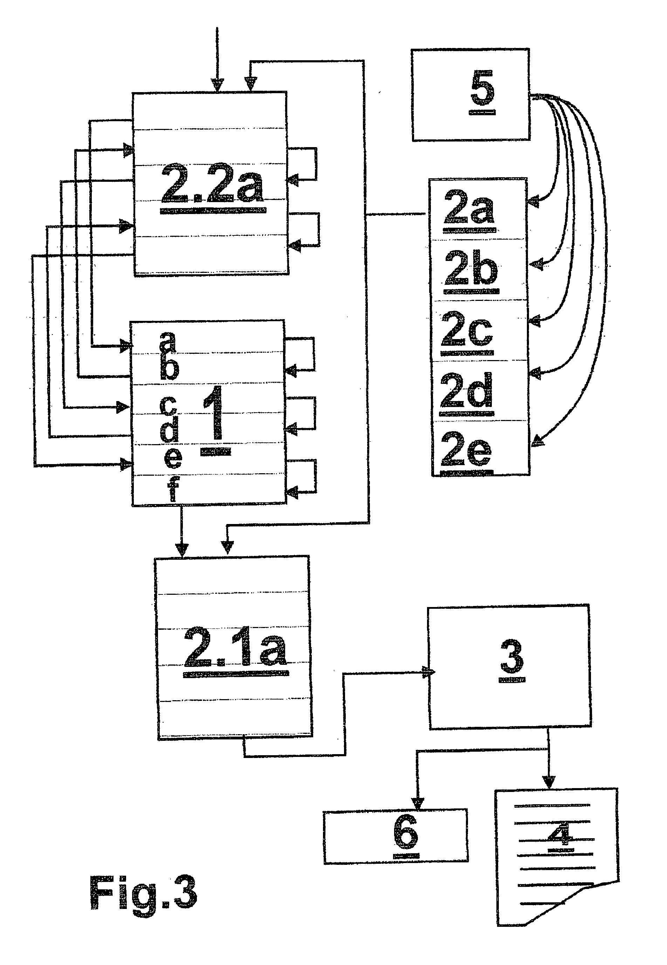

Es ist hinzuzufügen, dass auch hier der Ausspielbereich mit Gewinnbereich und mit den Ausspielbedingungen ausgestattet sein kann, wie dies zuvor beschrieben worden ist, Gewinnbereich und Ausspielbedingungen können alternativ über Befehlstasten angewählt werden. Jedoch ist auch der Gewinnbereich 2.2 in Unterabschnitte eingeteilt und es erfolgt nach jedem Unterabschnitt eine Blockierung der weiteren folgenden Unterabschnitte, die nur wieder aufgehoben werden kann, wenn zuvor ein oder mehrere Teilbereiche des Werbebereichs durchlaufen werden. Das bedeutet, daß nach Aufruf der einzelnen Abschnitte des Gewinnbereiches stets wieder ein Teilbereich des Werbebereiches, also eine bestimmte Firma aufgerufen wird. Dies ist anhand von Figur 3 dargestellt. Der Gewinnbereich 2.2a wird ebenfalls durch ein Zeitprogramm 5 zeitabhängig aufgerufen, so dass die in dem betroffenen Zeitabschnitt auszuspielenden Gewinne sichtbar gemacht werden. Der Gewinnbereich 2.2a ist ebenfalls in Teilbereiche unterteilt, welche nicht nacheinander durchlaufen werden können. Vielmehr erfolgt nach Durchlaufen eines Teilbereiches jeweils eine Umschaltung in den Werbereich, entweder automatisch oder durch Befehlstaste. Auch der Werbebereich ist in Teilbereiche, jeweils einer Firma a, b, c.... zugeordnet, unterteilt. Wie zuvor beschrieben, erfolgt eine automatische Weiterschaltung von Teilbereich zu Teilbereich (z. B. Firma a zu Firma b). Nach Durchlaufen des zweiten Teilbereiches erfolgt jeweils wieder eine Zurückschaltung in den nächsten Bereich des Gewinnbereiches 2.2a. Nach vollständigem Durchlaufen des Gewinnbereiches, d.h. nach Darstellung aller Werbereiche und nach Darstellung aller zur Ausspielung anstehenden Gewinne erfolgt hier automatisch oder durch Befehlstaste eine Weiterschaltung zu den Ausspielbedingungen, d.h. in den Teilbereich 2.1a des Ausspielbereiches 2a. Die Ausspielbedingungen können nunmehr ohne weiteres durchlaufen werden.

Dabei ist es allerdings sehr sinnvoll, wenn in den Ausspielbedingungen auch Aufgaben zu lösen sind, die den Nutzer veranlassen, zurück in den Werbebereich zu schalten. Es kann auf diese Weise z. B. die Aufgabe gestellt werden, festzustellen wieviel Firmen in dem Werbebereich vertreten sind oder welche Firma welche Ware vertreibt o.ä. Nach Durchlaufen aller Ausspielbedingungen die Speicherung im Dokumentationsbereich 3, wie zuvor beschrieben und die Ausgabe der Daten in einem Teilnehmerschein 4 oder an einen Server 6.

Der Vorteil der Erfindung besteht darin, daß die Kunden aller auf dem Datenträger werbenden Firmen die Werbung jeder dieser Firmen zur Kenntnis nehmen. Andererseits kann die Werbung wie auch die Ausspielung auf einen örtlich begrenzten Personenkreis eingegrenzt werden, der für die werbenden Firmen als Kundenkreis tatsächlich in Betracht kommt. Dadurch entsteht gerade für örtlich gebundene Firmen mit örtlich begrenztem Einzugsgebiet ein preiswertes und trotzdem effizientes Werbemedium.

### Bezugszeichenaufstellung

- 1.: Werbebereich
- 2.: Ausspielbereich
2a, 2b, 2c Folgeblock, zeitabhängiger Ausspielbereich
2.1 Ausspielbedingungen, Teilbereich
2.2 Gewinnbereich, Gewinne, Teilbereich
- 3.: Dokumentationsbereich
- 4.: Teilnehmerschein
- 5.: Zeitprogramm
- 6.: Server
- 7.: Bildschirm

## Patentansprüche

1. Beweglicher Datenträger für elektronische Datenverarbeitungsanlagen, insbesondere magnetisch oder durch Laser lesbare Speicherplatte, Compakt-Disk (CD) oder Digitale Videodisk (DVD)
zur Darstellung von Werbung mehrerer Firmen am Bildschirm eines PC
**dadurch gekennzeichnet, daß**
die auf dem Datenträger gespeicherten Werbedaten mit auf dem Datenträger gespeicherten Daten zur Ausspielung von Gegenständen durch auf dem Datenträger gespeicherte Programme derart vernetzt und gegen einander verriegelt sind,
daß die Ausspielungsdaten nur über die Werbedaten zumindest einer Firma automatisch oder per Verbindungstasten (link), welche in den betroffenen Werbebereichen angeordnet sind, abrufbar sind.

2. Beweglicher Datenträger für elektronische Datenverarbeitungsanlagen, insbesondere magnetisch oder durch Laser lesbare Speicherplatte, Compact - Disk (CD) oder Digitale Videodisk (DVD)
zur Darstellung von Werbung mehrerer Firmen am Bildschirm eines PC
**dadurch gekennzeichnet, daß**
die auf dem Datenträger gespeicherten Werbedaten mit auf dem Datenträger gespeicherten Daten zur Ausspielung von Gegenständen durch auf dem Datenträger gespeicherte Programme derart vernetzt und gegen einander verriegelt sind,
daß über die Ausspielungsdaten die Werbedaten zumindest einer Firma selbsttätig oder durch Verbindungstaste (link), welche im Ausspielbereich angeordnet ist, aufrufbar sind und vorzugsweise zur Herbeiführung des Ausspielungserfolges aufgerufen werden müssen.

3. Beweglicher Datenträger für elektronische Datenverarbeitungsanlagen, insbesondere magnetisch oder durch Laser lesbare Speicherplatte, Compact - Disk (CD) oder Digitale Videodisk (DVD) zur Darstellung von Werbung mehrerer Firmen am Bildschirm eines PC
**dadurch gekennzeichnet, daß**
die auf dem Datenträger gespeicherten Werbedaten mit auf dem Datenträger gespeicherten Daten zur Ausspielung von Gegenständen durch auf dem Datenträger gespeicherte Programme derart vernetzt und gegen einander verriegelt sind,
daß zur Herbeiführung des Ausspielungserfolges die Werbedaten zumindest einer Firma selbsttätig oder durch Verbindungstaste (link), welche im Ausspielbereich angeordnet ist, aufgerufen werden müssen.

4. Beweglicher Datenträger nach einem der Ansprüche 1 bis 3
**dadurch gekennzeichnet, daß**
die Gegenstände der Ausspielung auf der CD in einem Gewinnbereich gespeichert sind.

5. Beweglicher Datenträger nach Anspruch 4
**dadurch gekennzeichnet, daß**
der Gewinnbereich mehrere zur Ausspielung anstehende Gegenstände enthält, welche nach einem auf dem Datenträger abgespeicherten Zeitprogramm zur Ausspielung anstehen.

6. Beweglicher Datenträger nach einem der Ansprüche 1 bis 5
**dadurch gekennzeichnet, daß**
die Ausspielbedingungen sich zeitlich ändern und gfls. Auch die in dem Gewinnbereich abgespeicherten Gegenstände der Ausspielung nach einem auf dem Datenträger abgespeicherten Zeitprogramm aufrufbar, im übrigen jedoch vorzugsweise verriegelt sind.

7. Beweglicher Datenträger nach einem der Ansprüche 4 bis 6
**dadurch gekennzeichnet, daß**
der Gewinnbereich ganz oder für einen bestimmten Gegenstand wie die Daten zur Ausspielung von Gegenständen organisiert ist.

8. Beweglicher Datenträger nach einem der vorhergehenden Ansprüche
**dadurch gekennzeichnet, daß**
der Datenträger einen Dokumentenbereich enthält, welcher zur Ausgabe eines Teilnehmerscheins nur aufrufbar ist, wenn der Ausspielbereich geöffnet oder vorzugsweise nach vorgegebenen Erfolgskriterien durchlaufen wird.

9. Beweglicher Datenträger nach Anspruch 8
**dadurch gekennzeichnet, daß**
das auf dem Datenträger gespeicherte Programm eine Programmroutine enthält, durch welche der Gang der Ausspielung und insbesondere der erzielte Erfolg der Ausspielung in dem PC zumindest in dessen Arbeitsspeicher vorübergehend gespeichert und die Speicherwerte mit dem Teilnehmerschein ausgedruckt werden.
